# EUROPÄISCHE PATENTANMELDUNG

(11) **EP 2 308 691 A1**
(43) Veröffentlichungstag der Anmeldung: **13.04.2011**
(21) Anmeldenummer: 09012732.5
(22) Anmeldetag: 08.10.2009
(51) Int. Cl.: B60B 33/02

(54) **Auf einem Rollenchassis montierte Bremsrolle**

(71) Anmelder: Haussels, Berthold, 42929 Wermelskirchen (DE)
(72) Erfinder: Haussels, Berthold, 42929 Wermelskirchen (DE)
(74) Vertreter: Füssel, Michael

(57) **Zusammenfassung**

Die Erfindung betrifft eine auf einem Rollenchassis (1) montierte Bremsrolle (2). Erfindungsgemäß weist das Rollenchassis (1) ein Widerlager (15) auf, welches von einem Querstück (16) gebildet wird. Das Querstück (16) ist parallel zu einer Drehachse eines Druckhebels (12) und im Bereich eines mit dem Druckhebel (12) zusammenwirkenden Bremshebels (5) am Rollenchassis (1) angeordnet. Der Bremshebel (5) weist erfindungsgemäß zum Zusammenwirken mit dem Querstück (16) wenigstens eine in Freigabestellung (10) des Bremshebels (5) horizontal an eine ebenfalls horizontal liegende Kontaktzone anlegbar und zur Drehachse (17) des Druckhebels (12) geneigte Gleitfläche (19) auf. Hierdurch ergibt sich der Vorteil, dass die Gleitfläche (19) auf ihrem Weg von der Freigabestellung (10) in die Bremsstellung (9) des Bremshebels (5) flächenförmig an der horizontalen Kontaktzone des Querstücks (16) abgleitet, so dass Verschleißerscheinungen trotz hoher erreichbarer Anpresskräfte vermindert werden.

## Beschreibung

Die vorliegende Erfindung betrifft eine Bremsrolle nach Oberbegriff des Hauptanspruchs.

Derartige Bremsrollen sind bekannt.

Hierzu beschreibt beispielsweise die EU 07 020 288 eine Bremsrolle mit verringertem Betätigungshub. Das Prinzip einer derartigen Bremsrolle besteht darin, die Drehung des Bremshebels um seine drehgelenkige Verbindung mit dem Druckhebel so lange zu unterbinden, bis die Bremsstellung erreicht ist, um so nur den Hub des Druckhebels als Gesamtbetätigungshub zu erhalten. Hierzu weist der Bremshebel einen zum Drehgelenk des Druckhebels geneigten Stift auf, mit welchem der Bremshebel mit einem Widerlager des Rollenchassis eine Gleitstückpaarung bildet, so dass der Bremshebel auf seinem Weg von der Freigabestellung in die Bremsstellung nur zusammen mit dem Druckhebel entlang eines linienförmigen Mantelbereiches des Stiftes verschwenkbar ist.

Trotz kurzem Hub des Bremshebels kann nach diesem Prinzip ein Bremskörper mit einer hohen Anpresskraft an die Umfangsfläche einer Laufrolle angepresst werden.

Aufgabe der vorliegenden Erfindung ist es, eine derartige Bremsrolle so weiter zu bilden, dass Verschleißerscheinungen an besagter Gleitstückpaarung in verbesserter Weise vermindert werden.

Diese Aufgabe löst die Erfindung mit den Merkmalen des Hauptanspruchs.

Erfindungsgemäß ist vorgesehen, dass das Widerlager von einem am Rollenchassis angeordnetem Querstück gebildet wird, welches parallel zur Drehachse des Druckhebels und im Bereich des Bremshebels angeordnet ist, wobei der Bremshebel zum Zusammenwirken mit dem Querstück wenigstens eine in Freigabestellung horizontal an eine ebenfalls horizontal liegende Kontaktzone des Querstücks anlegbare und zur Drehachse des Druckhebels geneigte Gleitfläche aufweist.

Die Erfindung hat erkannt, dass im Gegensatz zum oben genannten Stand der Technik, in dem sich die Gleitstückkomponenten punktweise entlang einer vertikalen Linie berühren, das erfindungsgemäß angeordnete Querstück für die Gleitflächen am Bremshebel eine horizontale Berührungslinie bzw. Berührungszone bildet, die parallel zu sich selbst vertikal wandert. Die erfindungsgemäßen Gleitstückkomponenten berühren sich somit in Längsrichtung des Querstücks linienförmig, so dass der Bremshebel auf seinem Weg von der Freigabestellung in die Bremsstellung zusammen mit dem Druckhebel entlang eines flächenförmigen Mantelbereiches am Bremshebel verschwenkbar ist.

Hierdurch können Verschleißerscheinungen an besagter Gleitstückpaarung vermindert werden. Überraschender Weise können hierdurch sogar auch ungehärtete Gleitstückkomponenten für die Gleitstückpaarung genutzt werden, ohne dass sichtbare Verschleißerscheinungen an den Kontaktflächen auftreten.

Aus der Erfindung ergibt sich somit eine Erhöhung der Verschleißfestigkeit besagter Gleitstückkomponenten. Der Grund liegt in der erfindungsgemäß veränderten Pressungszone dieser Komponenten. Die dort auftretenden Hertz'schen Pressungen können durch die Hertz'schen Grundlagen bestimmt werden, wobei hier von einer vorteilhaften linienförmigen Pressungszone ausgegangen werden kann. Eine punktförmige Pressungszone, wie sie aus dem Stand der Technik hervorgeht, wird erfindungsgemäß ausgeschlossen.

Werden für die Bauteile der Gleitstückpaarung härtbare Materialien verwendet und auch gehärtet, können insbesondere mikroskopisch ersichtliche Verschleißerscheinungen auf ein Minimum reduziert werden, so dass sich die Lebensdauer von erfindungsgemäßen Bremsrollen erhöhen lässt.

Erfindungsgemäß können am Bremshebel eine einzige großflächige oder auch eine Vielzahl schmalflächiger Gleitfläche(n) vorgesehen sein. Wesentlich hierbei ist, dass alle Gleitflächen zur Drehachse des Druckhebels geneigt sind, so dass die aus einer oder mehreren Flächen gebildete Gleitfläche des Bremshebels praktisch nur schräg auf der horizontalen Kontaktzone des Querstücks abgleiten kann, sobald der Bremshebel betätigt wird.

Für eine Fixierung des Bremshebels in der Bremsstellung wird erfindungsgemäß vorgeschlagen, dass das obere Ende der jeweiligen Gleitfläche in einer Rastvertiefung ausläuft, die vom Querstück in der Bremsstellung des Bremshebels eingefangen oder überfangen wird. Ergänzend hierzu wird weiterhin vorgeschlagen, dass die Rastvertiefung komplementär zum Querschnitt des Querstücks ausgebildet ist. Der Querschnitt des Querstücks kann beispielsweise kreisförmig oder polygonal ausgeführt sein.

Durch diese Maßnahme wird der Bremshebel in einer sicheren Rastposition gehalten, in welcher die Bremswirkung des Bremskörpers in Richtung zur Umfangsfläche der Laufrolle aufrechterhalten werden kann.

Vorzugsweise weisen die Seiten des Bremshebels in der Freigabestellung zur Drehachse des Druckhebels hin geneigte und parallel verlaufende Durchgangsschlitze auf, welche mit einer ihrer Kanten die Gleitflächen bilden. Durch diese Maßnahme können die Gleitflächen besonders einfach durch geeignete Werkzeuge wie z.B. Bohrer oder Fräser am Bremshebel hergestellt werden.

Zweckmäßigerweise entspricht die jeweilige Breite eines Durchgangsschlitzes mindestens der maximalen Breite des Querschnitts des Querstücks. Durch diese Maßnahme wird insbesondere eine gemeinsame leichtgängige Bewegung des Brems-und Druckhebels sichergestellt.

Vorzugsweise werden zwei Gleitflächen vorgesehen, die über die Breite des Bremshebels voneinander beabstandet sind. Auf diese Weise ergeben sich zwei Gleitstückpaarungen, an denen sich der Bremshebel in statisch bestimmter Weise stabil abstützen kann.

Der Bremshebel kann aus Vollmaterial bestehen.

Vorzugsweise wird aber zumindest die Breite des Bremshebels innerhalb der tunnelartigen Ausnehmung des Rollenchassis von zwei Seitenblechen gebildet. Hierdurch können in besonders einfacher Weise entsprechend der jeweiligen Blechdicke z.B. zwei schmalflächige Gleitflächen am Bremshebel geschaffen werden.

Vorzugweise werden die Seitenbleche des Bremshebels mit den oben beschriebenen Durchgangsschlitzen versehen, wobei die Durchgangsschlitze an ihrem oberen Ende mit seitlichen Ausbrüchen versehen sind, so dass die Gleitflächen der Durchgangsschlitze in einer Rastvertiefung auslaufen.

Vorzugsweise werden die Rastvertiefungen und die Durchgangsschlitze der Seitenbleche ausgestanzt.

Weiterhin wird vorgeschlagen, dass die Seitenbleche durch eine Betätigungsplatte, z.B. durch Löt-, Schweiß-, Niet- oder Schraubverbindungen, miteinander verbunden sind. Die Betätigungsplatte kann aus dem Rollenchassis herausragen, um so zum Beispiel die Möglichkeit für eine vorteilhafte Fußbetätigung des Bremshebels zu schaffen.

Weiterhin wird vorgeschlagen, dass das Querstück im Bereich des Bremshebels an den Seitenwänden der tunnelartigen Ausnehmung befestigt ist. Hierzu wird weiterhin vorgeschlagen, dass die Seitenwände der tunnelartigen Ausnehmung im Bereich des Bremshebels laschenartig ausgebildet sind. Die laschenartigen Ausbildungen können zum Beispiel besonders leicht zugängliche Befestigungspunkte für das Querstück darstellen. Das Querstück kann beispielsweise mittels geeigneten form-, kraft- oder stoffschlüssigen Verbindungen sicher am Rollenchassis befestigt werden.

Bezüglich einer Erhöhung der Lebensdauer von erfindungsgemäßen Bremsrollen wird vorgeschlagen, dass das Querstück gehärtet wird, bevor es mit dem Rollenchassis verbunden wird. Hierzu ist vorstellbar, dass das Querstück aus einem härtbaren Blech gefertigt wird, welches dann als Querflansch am Rollenchassis befestigt werden kann, z.B. durch annieten.

Ergänzend hierzu wird vorgeschlagen, dass auch die Komponenten des Bremshebels, welche die Gleitflächen aufweisen, ebenfalls gehärtet werden, wobei besagte Komponenten auch separat zum Bremshebel ausgeführt sein können, so dass diese erst nach dem Härten mit dem Bremshebel verbunden werden.

Vorzugsweise wird für das Querstück eine Stange mit einem polygonalen oder kreisförmigen Querschnitt vorgesehen.

Im Folgenden wird die Erfindung anhand von Ausführungsbeispielen näher erläutert.

Es zeigen:
- Fig.1: eine erfindungsgemäße Bremsrolle in Seitenansicht, Freigabestellung;
- Fig.1a: Detailansicht der angelegten Gleitflächen am Widerlager gem. Fig.1;
- Fig.2: Teilansicht des Koppelgetriebes während einer Betätigungsphase;
- Fig.2a: Teilansicht der am Widerlager angelegten Gleitfläche gem. Fig.2;
- Fig.3: Teilansicht der Bremsrolle von oben;
- Fig.4: eine erfindungsgemäße Bremsrolle in Seitenansicht, Bremsstellung;
- Fig.4a: Teilansicht des in einer Rastvertiefung festgestellten Bremshebels gem. Fig.4;
- Fig.5: ein weiteres Ausführungsbeispiel der Erfindung;
- Fig.5a: Teilansicht des Koppelgetriebes gem. Fig.5, Freigabestellung;
- Fig.5b: Teilansicht des Koppelgetriebes gem. Fig.5, Bremsstellung;
- Fig.6: Draufsicht des Koppelgetriebes gem. Fig.5;

Sofern im Folgenden nichts anders gesagt ist, gilt die folgende Beschreibung stets für alle Figuren.

Die Figuren zeigen eine Bremsrolle 2.

Die Bremsrolle 2 ist auf einem Rollenchassis 1 montiert.

Sie weist eine Laufrolle 3 auf. Auf dem Umfang der Laufrolle 3 kann ein Bremskörper 4 über ein entsprechendes Koppelgetriebe 6 unter einer vorbestimmten Druckkraft aufgepresst werden.

Das Koppelgetriebe 6 weist einen Bremshebel 5 auf, der beispielsweise mit der Fußspitze betätigt werden kann.

Wird der Bremskörper 4 gegen die Umfangsfläche 7 gedrückt, entsteht eine Bremswirkung. Zu diesem Zweck wird der Bremskörper 4 über das Koppelgetriebe 6 in Richtung zur Umfangsfläche 7 der Laufrolle 3 bewegt und nach Überschreiten einer in vorbestimmter Position zu erwartenden Totpunktstellung des Bremshebels in der Bremsstellung 9 so lange in Anlage an die Umfangsfläche 7 der Bremsrolle 2 gehalten, bis der Bremshebel 5 aus der Bremsstellung 9 zurück in die Freigabestellung 10 verlagert wird.

Zu diesem Zweck weist das Koppelgetriebe 6 neben dem Bremshebel 5 einen an einem Ende 11 einseitig am Rollenchassis 1 angeschlagenen Druckhebel 12 auf. Der Druckhebel 12 ist in einer tunnelartigen Ausnehmung 8 im Rollenchassis 1 eingebettet und überspannt einen zentral gelegenen und federabgestützten Druckbolzen 13, der von oben auf den Bremskörper 4 drückt, sofern der Druckhebel 12 entsprechend nach unten verlagert wird.

An seinem anderen Ende 14 ist der Druckhebel 12 lediglich mit dem Bremshebel 5 drehgelenkig verbunden.

Hierzu ist beispielsweise aus der EU 07 020 288 ein Bremshebel 5 für eine Bremsrolle mit verringertem Betätigungshub bekannt, welcher mit einem Gleitstück und mit einem Widerlager 15 des Rollenchassis 1 eine Gleitstückpaarung bildet. Die besagten Gleitstückkomponenten berühren sich hierbei punktweise, so dass der Bremshebel 5 auf seinem Weg von der Freigabestellung 10 in die Bremsstellung 9 nur zusammen mit dem Druckhebel 12 entlang eines linienförmigen Mantelbereiches des Stiftes verschwenkt werden kann.

Erfindungsgemäß ist nun vorgesehen, dass das Widerlager 15 von einem am Rollenchassis 1 angeordnetem Querstück 16 gebildet wird, welches parallel zur Drehachse 17 des Druckhebels 12 und im Bereich des Bremshebels 5 angeordnet ist. Weiterhin sieht die Erfindung vor, dass der Bremshebel 5 zum Zusammenwirken mit dem Querstück 16 wenigstens eine in Freigabestellung 10 horizontal an eine ebenfalls horizontal liegende Kontaktzone anlegbare und zur Drehachse des Druckhebels geneigte Gleitfläche 19 aufweist.

Die beiden Drehachsen 17 des Druckhebels 12 liegen zueinander parallel und horizontal, so dass der Bremshebel 5 und der Druckhebel 12 jeweils zusammen in dieselbe Richtung schwenkbar sind.

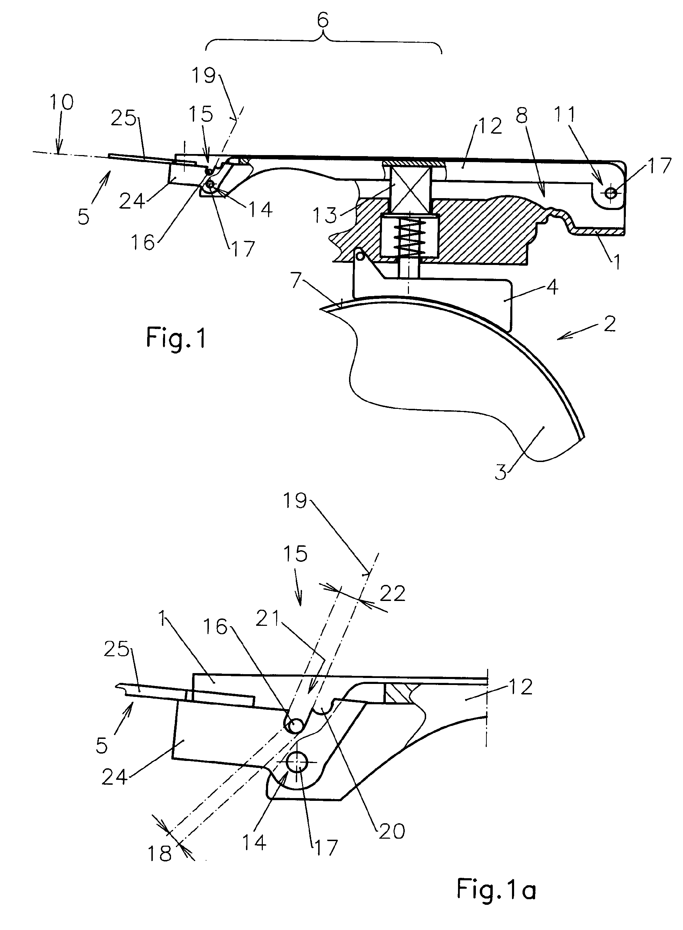

Insbesondere die Figuren 1,2,4 und 5 zeigen diesen Sachverhalt.

Erfindungsgemäß weist der Bremshebel 5 Gleitflächen 19 auf, die sich zumindest schmalbandig in Längsrichtung der Querstange 16 erstrecken und nur schräg auf einer horizontalen Berührungslinie der Stange 16 abgleiten können, sobald der Bremshebel 5 betätigt wird. Die vertikale Länge der Gleitflächen 19 resultiert im Wesentlichen aus dem gewünschten gemeinsamen Bewegungshub des Brems- und Druckhebels 5,12.

Dabei gleiten die Gleitflächen 19 auf ihrem Weg von der Freigabestellung 10 in die Bremsstellung 9 flächenförmig an der horizontalen Kontaktzone des Querstücks 16 ab.

Durch die erfindungsgemäß flächenförmige Gleitstückpaarung können insbesondere die Gleitflächen 19 am Bremshebel 5 und das Querstück 16 auch aus ungehärteten Materialien bestehen, ohne dass dort Verschleißerscheinungen ersichtlich sind. Vorzugsweise werden aber zumindest die Kontaktzonen der Gleitstückpaarung gehärtet, um die Lebensdauer der Bremsrolle 2 zu erhöhen. Daher werden für das Querstück und für den Bremshebel 5, bzw. für die Bauteile des Bremshebels 5, welche die Gleitflächen 19 aufweisen, härtbare Materialen wie z.B. Stahl vorgesehen.

Die Gleitflächen 19 am Bremshebel 5 können zum Beispiel von einer einzigen zusammenhängenden Kontaktfläche gebildet werden. Hierbei kann die Gleitfläche 19 aber auch ohne weiteres beispielsweise aus mehreren einzelnen Schmalflächen lamellenartig zusammengesetzt sein.

Wesentlich hierbei ist, dass die dabei auf das Koppelgetriebe 6 wirkenden Kräfte von dem Querstück 16 auf das Koppelgetriebe 6 zur Auswirkung haben, dass infolge der Neigung der Gleitflächen 19 zum hinteren Ende 11 des Druckhebels 12 eine Zwangsführung für die Kombination aus Bremshebel 5 und Druckhebel 12 entsteht, die nur zusammen entlang der sich ergebenden Berührungszone der Gleitstückpaarung verschwenkbar sind, wobei erfindungsgemäß keine ersichtlichen Verschleißerscheinungen an den Gleitflächen 19 auftreten.

Erfindungsgemäß wird hierdurch ein kurzer Hub des Bremshebels 5 ermöglicht, um den Bremskörper 4 bei verringertem Verschleiß besagter Gleitstückpaarung trotzdem mit einer hohen Anpresskraft an die Umfangsfläche 7 der Laufrolle 3 anpressen zu können.

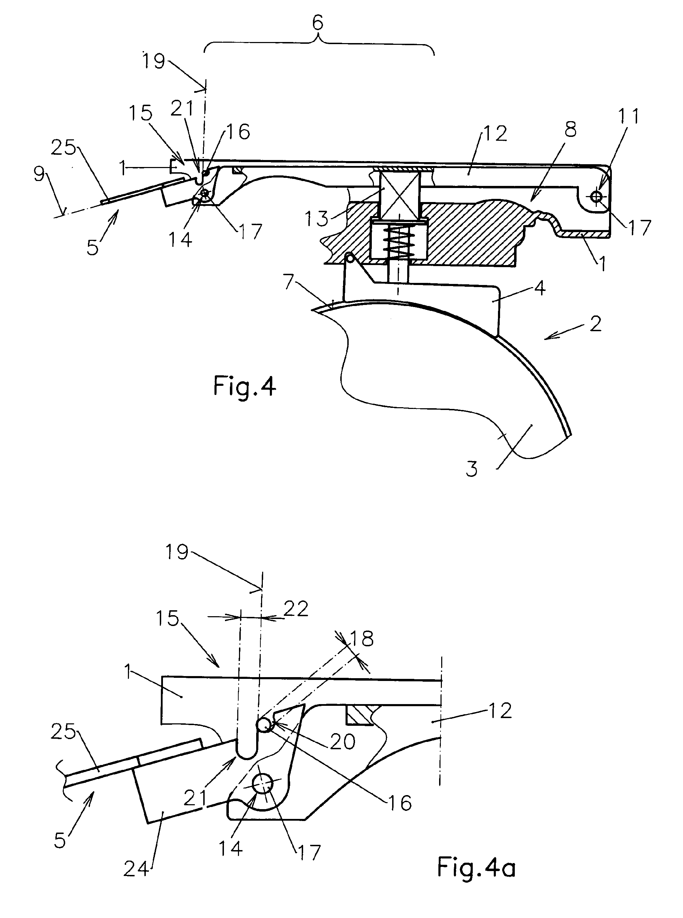

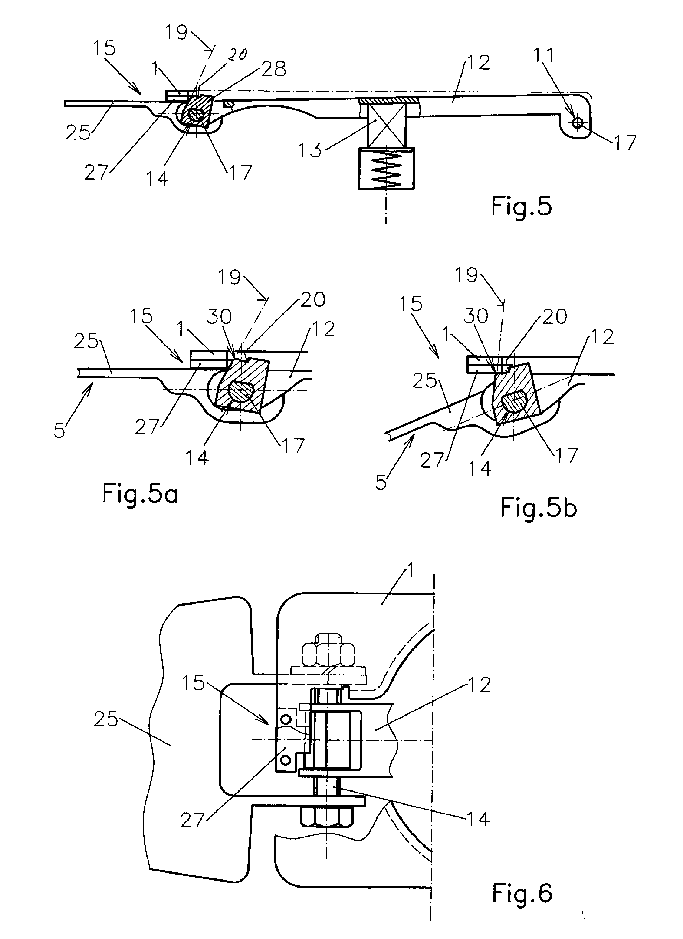

Für eine sichere Fixierung des Bremshebels 5 in der Bremsstellung 9, zeigen die Figuren, dass das obere Ende der jeweiligen Gleitfläche 19 in einer Rastvertiefung 20 ausläuft, die vom Querstück 16 in der Bremsstellung 9 des Bremshebels 5 eingefangen wird. Insbesondere in den Figuren 4, 4a und 5b wird gezeigt, dass zum Aufrechterhalten der Bremsstellung das Querstück 16 in der Rastvertiefung 20 formschlüssig einrastbar ist. Hierzu zeigen insbesondere die Figuren 4 und 4a weiterhin, dass die Rastvertiefung 20 komplementär zum Querschnitt 18 des Querstücks 16 ausgebildet ist.

Hierdurch kann insbesondere ein leichtgängiges Ein- und Ausrasten des Bremshebels 5 bewerkstelligt werden.

In Fig.1 bis Fig. 4a ist der Querschnitt 18 des Querstücks 16 kreisförmig ausgeführt. In Fig.5 bis Fig.6 ist der Querschnitt 18 des Querstücks 16 polygonal ausgeführt und wird in diesem Beispiel von einem Flachblech 27 gebildet. Darüber hinaus kann besagter Querschnitt 18 aber auch von einem Querstück 16 mit Polygonalprofil, z.B. einer Stange mit Sechskantprofil, gebildet werden.

Insbesondere in Fig.1 bis Fig.4a wird gezeigt, dass der Bremshebel 5 an seinen Seiten Durchgangsschlitze 21 aufweist. Erfindungsgemäß sind die Durchgangsschlitze 21 zur Drehachse 17 des Druckhebels 12 hin geneigt und auch parallel dazu ausgerichtet, so dass sie mit einer ihrer Kanten die Gleitflächen 19 bilden.

Die jeweiligen Breiten 22 der Durchgangsschlitze 21 entsprechen mindestens der maximalen Breite des Querschnitts 18 des Querstücks 16. Durch diese Maßnahme wird ein gemeinsames Verschwenken beider Hebel 5,12 , insbesondere ohne die Gefahr des Verklemmens, sichergestellt.

Die Figuren zeigen ein bevorzugtes Ausführungsbeispiel, in dem zwei Gleitflächen 19 vorgesehen sind, die über die Breite 23 des Bremshebels 5 voneinander beabstandet sind. Durch diese Maßnahme kann sich der Bremshebel 5 in einer besonders lagestabilen Art und Weise an dem Querstück 16 abstützen.

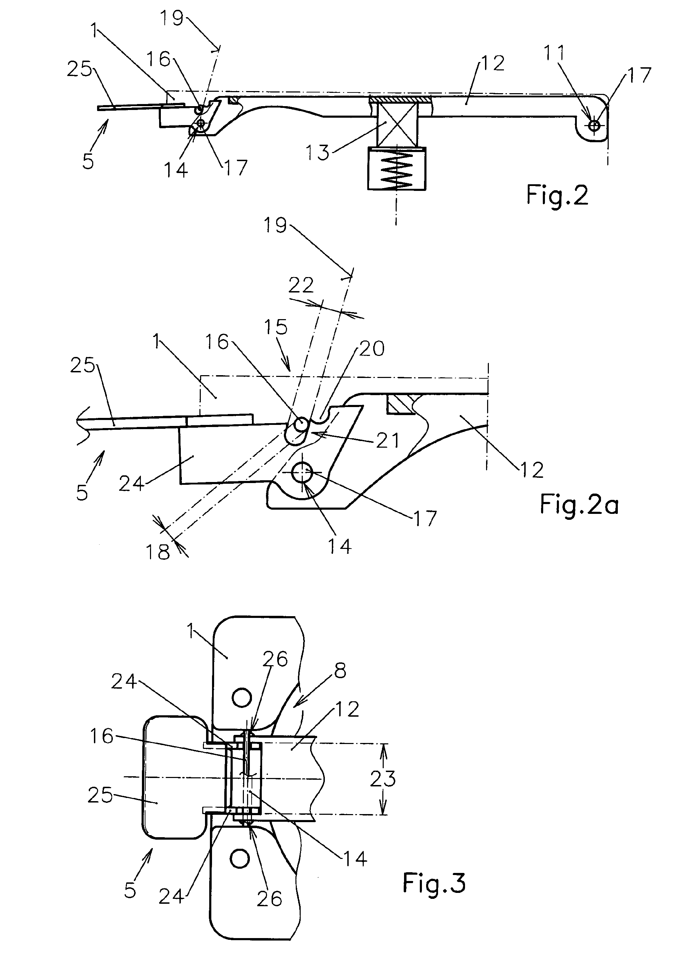

Ergänzend hierzu zeigt insbesondere Fig.3, dass die Breite 23 des Bremshebels 5 im Bereich der tunnelartigen Ausnehmung 8 des Rollenchassis 1 von zwei Seitenblechen 24 gebildet wird. In den Seitenblechen 24 sind zur Drehachse 17 des Druckhebels 12 geneigte und parallel verlaufende Durchgangsschlitze 21 eingearbeitet. Am oberen Ende der Durchgangsschlitze 21 schließen sich seitliche Rastvertiefungen 20 an. Die Gleitflächen 19 werden hierbei nachvollziehbar aus den jeweiligen Blechtiefen gebildet.

Die Seitenbleche 24 sind Ausstanzteile aus einem flachen Blech und drehgelenkig mit dem Druckhebel 12 verbunden. Die Seitenbleche 24 können zum Beispiel mittels einer gemeinsamen Achse am Druckhebel 12 drehgelenkig verbunden werden oder auch zum Beispiel mit jeweils eigenen Drehgelenken dort verbunden werden.

Weiterhin zeigen Fig.1 bis Fig.4a, dass die Seitenbleche 24 durch eine Betätigungsplatte 25 miteinander verbunden und beaufschlagbar sind. Die Seitenbleche 24 sind vorzugsweise mittels Schweißverbindungen an der Betätigungsplatte 25 befestigt.

Insbesondere in Fig.3 wird dargestellt, dass das Querstück 16 an den Seitenwänden 26 der tunnelartigen Ausnehmung 8 befestigt ist. Hierzu können beispielsweise die Seitenwände 26 im Bereich des Bremshebels 5 laschenartig ausgebildet sein, um beispielsweise das Querstück 16 mit geeigneten Mitteln, z.B. durch anschweißen, anlöten oder anschrauben, an Laschen zu befestigen.

Weiterhin zeigen insbesondere die Fig.1 bis 4a, dass für das Querstück 16 eine Stange vorgesehen ist. In diesem Fall ist der Querschnitt der Stange kreisförmig und bildet eine kreiszylindrische Mantelfläche, welche unendlich viele horizontale und linienförmige Kontaktzonen für die Gleitflächen 19 bilden kann.

Ergänzend hierzu kann das Querstück 16 aber auch z.B. von einem Profilstab mit Sechskantquerschnitt gebildet werden. Hier bilden vorzugsweise die Kanten des Profilstabs horizontale und linienförmige Kontaktzonen für die Gleitflächen 19. Im Falle des in den Fig.5 bis 6 gezeigten Ausführungsbeispiels wird in besonders einfacher Weise ein Flachblech 27 mit rechteckigem Querschnitt 18 genutzt, um so ein Querstück 16 mit vier möglichen Anlagekanten zu schaffen, die sich erfindungsgemäß über die Breite der tunnelartige Ausnehmung des Rollenchassis 1 erstrecken können. Derartige Anlagekanten können z.B. mit einer Fase oder einem Radius versehen sein.

Das Flachblech 27 kann mit geeigneten Mitteln, z.B. durch Schweißen, Löten, Anschrauben oder Annieten, mit dem Rollenchassis 1 verbunden werden. Insbesondere Fig.6 zeigt ein Flachblech 27, das als Querflansch ausgeführt ist und unter einer Querstrebe des Rollenchassis 1 angeflanscht werden kann. Dies hat den Vorteil, dass das Flachblech vor dem Anbringen separat gehärtet werden kann.

Darüber hinaus ist es aber auch möglich, bereits beim Fertigen des Rollenchassis 1 das Flachblech 27 herauszuarbeiten, z.B. durch Ausstanzen. Das Rollenchassis 1 und das Flachblech 27, bzw. das Querstück 16, können also aus einem Stück gefertigt sein.

Erfindungswesentlich ist hierbei, dass am Rollenchassis 1 ein Widerlager 15 mit wenigstens einem horizontalen und linienförmigen Anlagenbereich zur Verfügung steht, an dem die Gleitflächen 19 des Bremshebels 5 flächenförmig abgleiten können.

Vorzugsweise bestehen die Gleitstückkomponenten zwar aus härtbaren Material, berücksichtigt man aber, dass eine derartige Bremsrolle 2 einige 100.000 Lastwechsel überstehen muss, entsteht durch die praktisch stets nur flächenförmige Berührung zwischen den Gleitflächen 19 des Bremshebels 5 und dem Widerlager 15 eine Flächenpressung, die letztlich auch bei ungehärteten Gleitstückkomponenten zu keinem sichtbaren Verschleiß an diesen Kontaktstellen führt.

Von der Freigabestellung 10, insbesondere gezeigt in Figur 1, 1a, 5a und 5, können beide Hebel 5,12 mittels der erfindungsgemäßen Gleitstückpaarung zusammen in die Bremsstellung 9 verschwenkt werden, wobei mittels Rastvertiefungen 20 ein leichtgängiger Übergang in eine festgestellte Bremsstellung 9 erfolgt. Insbesondere die Figuren 2 und 2a stellen einen derartig leichtgängigen Übergang in nachvollziehbarer Weise dar.

Zweckmäßigerweise weist das Querstück 16 und auch die Gleitfläche 19 eine glatte Oberfläche auf.

Insbesondere in Fig.5 bis 6 weist der Bremshebel 5 einen Klotz 28 auf, an dem eine einzige Ebene eine Gleitfläche 19 bildet. Die Gleitfläche ist zur Drehachse 17 des Druckhebels 12 hin geneigt und wirkt erfindungsgemäß mit dem als Querflansch ausgeführten Flachblech 27, bzw. mit einer dort angeordneten horizontalen linienförmigen Anlagekante, zusammen.

Der Bremshebel 5 weist weiterhin eine im Querschnitt unrunde Drehachse 17 auf. In diesem Beispiel besitzt die Drehachse 17 eine abgeflachte Kreisform. Im Klotz 28 ist ein geräumter Querschnitt vorgesehen, der komplementär zum Querschnitt der Drehachse 17 ausgeführt ist, um den Klotz 28 auf der Drehachse 17 aufschieben bzw. aufstecken zu können. In dem gezeigten Ausführungsbeispiel wird diese Räumung im Klotz 28 durch eine sekantial abgeflachte Bohrung gebildet, so dass der Klotz 28 mit dem Bremshebel 5 in einfacher Weise verdrehfest verbunden werden kann. Die Bohrung im Klotz 28 ist eine Durchgangsbohrung, wodurch der Klotz 28 beispielsweise in einfacher Weise mittig auf der Drehachse 17 positioniert werden kann.

Insbesondere Fig.6 stellt diesen Sachverhalt dar. Hier wird nachvollziehbar gezeigt, dass der Klotz 28 gegenüber der zentralen Position des Druckbolzens 13 angeordnet werden kann, wodurch die Betätigungskräfte am Bremshebel 5 optimal auf den Druckbolzen 13 übertragen werden können. Der Klotz 28 ist mit strammem Sitz mit der Drehachse 17 verbunden.

Dieses Ausführungsbeispiel hat insbesondere den Vorteil, dass der zum Bremshebel 5 separat ausgeführte Klotz 28 vor seinem Zusammenbau mit dem Bremshebel 5 gehärtet werden kann. Vorzugsweise besteht der Klotz 28 aus Vollmaterial. Mittels einer Schraubenverbindung ist der Bremshebel 5 drehgelenkig mit dem Druckhebel verbunden.

Die Oberseite des Klotzes 28 weist einen Vorsprung 30 auf, an dem sich ein Absatz zur Bildung einer Rastvertiefung 20 anschließt. Insbesondere wenn das Widerlager 15 eine horizontale linienförmige Anlagekante aufweist, können die Gleitstückkomponenten beim Wechsel der Bremsstellungen über einen solchen Vorsprung 30 leichtgängig hinweggleiten. Der Vorsprung 30 bewirkt weiterhin ein zuverlässiges Halten des Bremshebels 5 der Bremsstellung 9.

### Bezugszeichenliste

- 1: Rollenchassis
- 2: Bremsrolle
- 3: Laufrolle
- 4: Bremskörper
- 5: Bremshebel
- 6: Koppelgetriebe
- 7: Umfangsfläche
- 8: tunnelartige Ausnehmung
- 9: Bremsstellung
- 10: Freigabestellung
- 11: am Rollenchassis angeschlagenes Ende des Druckhebels
- 12: Druckhebel
- 13: Druckbolzen
- 14: am Bremshebel drehgelenkig verbundenes Ende des Druckhebels
- 15: Widerlager
- 16: Querstück
- 17: Drehachse
- 18: Querschnitt der Stange
- 19: Gleitfläche
- 20: Rastvertiefung
- 21: Durchgangsschlitz
- 22: Breite des Durchgangsschlitzes
- 23: Breite des Bremshebels
- 24: Seitenblech
- 25: Betätigungsplatte
- 26: Seitenwand
- 27: Flachblech
- 28: Klotz
- 29:
- 30: Vorsprung

## Patentansprüche

1. Auf einem Rollenchassis (1) montierte Bremsrolle (2) mit einer Laufrolle (3) und einem Bremskörper (4), der von einem Bremshebel (5) über ein Koppelgetriebe (6) in Richtung zur Umfangsfläche (7) der Laufrolle (3) bewegt und nach Überschreiten der Totpunktstellung des Bremshebels (5) in seiner Bremsstellung (9) so lange in Anlage an die Umfangsfläche (7) gehalten wird, bis der Bremshebel (5) aus der Bremsstellung (9) rückwärts über die Totpunktstellung in die Freigabestellung (10) zurückverlagert wird, wobei das Koppelgetriebe (6) neben dem Bremshebel (5) einen an einem Ende (11) einseitig am Rollenchassis (1) angeschlagenen Druckhebel (12) aufweist, welcher in einer tunnelartigen Ausnehmung (8) im Rollenchassis (1) eingebettet ist, einen zentral gelegenen und federgestützten Druckbolzen (13) überspannt und an seinem anderen Ende (14) lediglich mit dem Bremshebel (5) drehgelenkig verbunden ist, wobei der Bremshebel (5) mit einem Gleitstück und das Rollenchassis (1) mit einem Widerlager (15) eine Gleitstückpaarung bilden, so dass der Bremshebel (5) auf seinem Weg von der Freigabestellung (10) in die Bremsstellung (9) nur zusammen mit dem Druckhebel (12) verschwenkbar ist, **dadurch gekennzeichnet, dass** das Widerlager (15) von einem am Rollenchassis (1) angeordneten Querstück (16) gebildet wird, welches parallel zur Drehachse (17) des Druckhebels (12) und im Bereich des Bremshebels (5) angeordnet ist, wobei der Bremshebel (5) zum Zusammenwirken mit dem Querstück (16) wenigstens eine in Freigabestellung (10) horizontal an eine ebenfalls horizontal liegende Kontaktzone des Querstücks (16) anlegbare und zur Drehachse (17) des Druckhebels (12) geneigte Gleitfläche (19) aufweist.

2. Bremsrolle (2) nach Anspruch 1, **dadurch gekennzeichnet, dass** das obere Ende der jeweiligen Gleitfläche (19) in einer Rastvertiefung (20) ausläuft, die vom Querstück (16) in der Bremsstellung (9) des Bremshebels (5) eingefangen wird.

3. Bremsrolle (2) nach Anspruch 2, **dadurch gekennzeichnet, dass** die Rastvertiefung (20) komplementär zum Querschnitt (18) des Querstücks (16) ausgebildet ist.

4. Bremsrolle (2) nach Anspruch 1 bis 3, **dadurch gekennzeichnet, dass** in der Freigabestellung (10) die Seiten des Bremshebels (5) zur Drehachse (17) des Druckhebels (12) geneigte und parallel verlaufende Durchgangsschlitze (21) aufweisen, welche mit einer ihrer Kanten die Gleitflächen (19) bilden.

5. Bremsrolle (2) nach Anspruch 4, **dadurch gekennzeichnet, dass** die jeweiligen Breiten (22) der Durchgangsschlitze (21) mindestens der maximalen Breite des Querschnitts (18) des als Stange ausgebildeten Querstücks (16) entsprechen.

6. Bremsrolle (2) nach einem der Ansprüche 1 bis 5, **dadurch gekennzeichnet, dass** zwei Gleitflächen (19) vorgesehen sind, die über die Breite (23) des Bremshebels (5) voneinander beabstandet sind.

7. Bremsrolle (2) nach einem der Ansprüche 1 bis 6, **dadurch gekennzeichnet, dass** die Breite (23) des Bremshebels (5) von zwei Seitenblechen (24) gebildet wird.

8. Bremsrolle (2) nach Anspruch 7, **dadurch gekennzeichnet, dass** die Seitenbleche (24) ausgestanzt sind.

9. Bremsrolle (2) nach Anspruch 7 und 8, **dadurch gekennzeichnet, dass** die Seitenbleche (24) durch eine Betätigungsplatte (25) miteinander verbunden sind.

10. Bremsrolle (2) nach einem der Ansprüche 1 bis 9, **dadurch gekennzeichnet, dass** ein als Stange ausgebildetes Querstück (16) an Seitenwänden (26) der tunnelartigen Ausnehmung (8) befestigt ist.

11. Bremsrolle (2) nach Anspruch 10, **dadurch gekennzeichnet, dass** die Seitenwände (26) der tunnelartigen Ausnehmung (8) im Bereich des Bremshebels (5) laschenartig ausgebildet sind.

12. Bremsrolle (2) nach einem der Ansprüche 1 bis 11, **dadurch gekennzeichnet, dass** für das Querstück (16) eine Stange vorgesehen ist.

13. Bremsrolle (2) nach Anspruch 12, **dadurch gekennzeichnet, dass** für die Stange ein Rundstab vorgesehen ist.

14. Bremsrolle (2) nach einem der Ansprüche 1 bis 11, **dadurch gekennzeichnet, dass** für das Querstück (16) ein als Querflansch ausgeführtes separates Flachblech (27) vorgesehen ist.

15. Bremsrolle (2) nach Anspruch 14, **dadurch gekennzeichnet, dass** das Flachblech (27) unter einer Querstrebe des Rollenchassis (1) angebracht ist.

16. Bremsrolle (2) nach einem der Ansprüche 1 bis 15, **dadurch gekennzeichnet, dass** ein mit dem Bremshebel (5) verbundener separater Klotz (28) die Gleitflächen (19) aufweist.

17. Bremsrolle (2) nach Anspruche 16, **dadurch gekennzeichnet, dass** der Klotz (28) mittels einer im Querschnitt unrunden Drehachse (17) mit dem Bremshebel (5) verbunden ist und zu diesem Zweck im Klotz (28) ein geräumter Querschnitt vorgesehen ist, der komplementär zum Querschnitt der Drehachse (17) ausgeführt ist.

18. Bremsrolle (2) nach Anspruche 17, **dadurch gekennzeichnet, dass** der geräumte Querschnitt von einer sekantial abgeflachten Durchgangsbohrung gebildet wird.

19. Bremsrolle (2) nach einem der Ansprüche 16 bis 18, **dadurch gekennzeichnet, dass** der Klotz (28) mittig auf der Drehachse (17) positioniert ist.

20. Bremsrolle (2) nach einem der Ansprüche 16 bis 19, **dadurch gekennzeichnet, dass** der Klotz (28) separat gehärtet ist.

21. Bremsrolle (2) nach einem der Ansprüche 1 bis 20, **dadurch gekennzeichnet, dass** zumindest die Kontaktzonen der Gleitstückpaarung gehärtet werden.
